# EUROPÄISCHE PATENTSCHRIFT

(11) **EP 0 790 907 B1**
(45) Veröffentlichungstag und Bekanntmachung des Hinweises auf die Patenterteilung: **22.07.1998**
(21) Anmeldenummer: 95938421.5
(22) Anmeldetag: 06.11.1995
(51) Int. Cl.: B60T 8/36, F16K 31/06, H01F 7/16, H01F 7/13

(54) **VENTILANORDNUNG**
VALVE ASSEMBLY
ENSEMBLE SOUPAPE

(30) Priorität: 08.11.1994 DE 4439890
(43) Veröffentlichungstag der Anmeldung: 27.08.1997
(73) Patentinhaber: LUCAS INDUSTRIES PUBLIC LIMITED COMPANY, Solihull, West Midlands B91 3TX (GB)
(72) Erfinder: LUBISCHER, Frank, D-56154 Boppard (DE); WALD, Thomas, D-56288 Hollnich (DE)
(74) Vertreter: Schmidt, Steffen J., Dipl.-Ing.
(86) Internationale Anmeldenummer: EP9504356
(87) Internationale Veröffentlichungsnummer: WO9614227

(56) Entgegenhaltungen:
- WO-A-95/03197
- DE-A- 2 036 110
- DE-A- 3 609 340
- DE-A- 3 831 426
- DE-A- 4 002 865
- DE-A- 4 016 754
- DE-A- 4 129 638
- DE-A- 4 137 123
- GB-A- 2 126 297
- US-A- 3 818 927

## Beschreibung

Die vorliegende Erfindung betrifft eine Ventilanordnung mit den Merkmalen des Oberbegriffs des Anspruchs 1. Eine solche Ventilanordnung ist aus DE-A-4 002 865 bekannt.

In der EP-0492109 A1 ist ein Sperrventil mit einem verbraucherseitigen Ventilsitz und einem druckerzeugerseitigen Schließglied beschrieben, das durch Magnetkraftwirkung auf einem Anker am Ventilsitz anzugreifen vermag. Zwischen dem Anker und dem Schließglied ist eine Druckfeder angeordnet. Diese übt in der Ventilschließstellung eine auf den Ansprechdruck abgestimmte Schließkraft auf das Schließglied aus. Auf diese Weise ist in der Ventileinheit ein Absperrventil und ein Druckbegrenzungsventil verwirklicht.

Aus der DE-3832023 ist bekannt, gegenparallel zu einem ASR-Umschaltmagnetventil Rückschlagventile mit unterschiedlicher Vorspannung als Sicherheitsventile vorzusehen. Allerdings sind diese Rückschlagventile als separate Baugruppen ausgeführt.

Aus der DE-3506287 A1 ist ein Elektroventil zur Steuerung von Antiblockiervorrichtungen in Kraftfahrzeugen bekannt, das den Druckabfall in der Betätigungsvorrichtung steuert, durch den ein blockiertes Rad des Fahrzeugs gelöst wird, so daß die verlorene Bodenhaftung wieder hergestellt wird. Dazu weist das Elektroventil eine mit dem Steuerkreis zur Steuerung der Kraftfahrzeugbremsen zu verbindende Eingangsöffnung, eine mit einer Betätigungsvorrichtung der zugeordneten Bremse zu verbindende Ausgangsöffnung und eine mit einem Ablaufbehälter verbundene Ablauföffnung auf. Ein Ventilschieberorgan dient zur wahlweisen Verbindung der Ausgangsöffnung mit der Eingangsöffnung und der Ablauföffnung. Das Ventilschieberorgan, das durch elastische Mittel in diejenige Position vorgespannt ist, in der die Ausgangsöffnung mit der Eingangsöffnung in Verbindung steht, läßt sich durch einen Elektromagneten gegen die Wirkung der elastischen Mittel in diejenige Position bewegen, in der die Ausgangsöffnung mit der Ablauföffnung verbunden ist. Im Bereich der Ablauföffnung ist ein Rückschlagventil angeordnet, welches bewirkt, daß das Fluid nur dann ablaufen kann, wenn sein Druck über einem vorbestimmten Schwellenwert liegt.

Aus der DE-1650574 A1 ist ein elektromagnetisch betätigbares Miniaturventil mit einem Magnetsystem, das einen Radial- und einen Axialluftspalt hat, und dessen Ventilglied bei erregtem Magnetsystem auf einem Ventilsitz aufliegt und dadurch dessen Fluidströmungsweg sperrt. Bei diesem Ventil verläuft bei entregtem Magnetsystem der Fluidströmungsweg vom Ventilsitz aus durch den magnetischen Axialluftspalt und dann vom Anker abgewendet durch das Ventilgehäuse nach außen. Damit befindet sich der Anker in einem fluidströmungstoten Raum, da die Fluidströmung die magnetischen Feldlinien einmal im Axialluftspalt und einmal beim Durchtritt durch das Gehäuse schneidet.

Aus der DE-4112136 A1 ist eine Baueinheit aus einem Druckbegrenzungsventil und einem Umschaltventil für eine hydraulische Bremsanlage mit einer Blockierschutz- und Antriebsschlupfregeleinrichtung bekannt. Die Baueinheit hat ein aus einem Gehäusemantel mit einer darin aufgenommenen Spule gebildetes Führungsrohr für einen darin längs bewegbar aufgenommenen Anker. Das Führungsrohr ist an beiden Enden durch jeweilige Jochteile abgeschlossen. Das erste Jochteil weist einen ersten Anschluß des Umschaltventils auf. Dieser außermittig angeordnete Anschluß steht mit dem Innenraum des Führungsrohres in Verbindung. Darüber hinaus weist das erste Jochteil den koaxial zur Längsachse des Führungsrohres verlaufenden dritten Anschluß des Umschaltventils auf. Dieser dritte Anschluß endet in einem ersten Ventilsitz. Das zweite Jochteil ist mittig mit dem zweiten Anschluß des Umschaltventils versehen. Dieser zweite Anschluß führt im Inneren zu einem zweiten Ventilsitz.

Der Anker des Umschaltventils ist rohrförmig ausgebildet und weist auf der Seite des zweiten Jochteils einen Innenbund auf. An diesem Innenbund ist eine als Schraubendruckfeder ausgebildete Rückstellfeder abgestützt, welche an dem zweiten Jochteil angreift. Im Anker sind zwei für Druckmittel durchlässige Scheiben aufgenommen, zwischen denen sich eine als Schraubendruckfeder ausgebildete koaxial zur Längsachse verlaufende Feder befindet. Die Feder ist einer Vorspannkraft unterworfen, aufgrund der die erste Scheibe an einem in den Anker eingefügten Anschlagring und die zweite Scheibe am Innenbund abgestützt ist. Auf der Seite des ersten Jochteils ist an der ersten Scheibe eine als erstes Schließglied dienende Kugel befestigt. Das erste Schließglied bildet im Zusammenwirken mit dem Ventilsitz des ersten Jochteils ein erstes Sitzventil des Umschaltventils. An der zweiten Scheibe des Ankers ist auf der Seite des zweiten Jochteils gleichfalls eine Kugel als zweites Schließglied angeordnet. Das Schließglied bildet im Zusammenwirken mit dem Ventilsitz des zweiten Jochteils ein Sitzventil sowohl des Umschaltventils als auch des Druckbegrenzungsventils.

Diese Anordnung weist relativ viele Teile auf und ist kompliziert herzustellen.

Demgegenüber ist es Aufgabe der Erfindung, eine Ventilanordnung einfacher und mit weniger Bauteilen herstellbar zu gestalten.

Zur Lösung dieser Aufgabe ist die eingangs genannte Ventilanordnung durch die Merkmale des kennzeichnenden Teils des Anspruchs 1 weitergebildet.

Bei einem derartigen Ventil wird bei Überschreiten eines Grenzdrucks die Schließkraft überwunden und das Ventil öffnet sich, so daß eine weitere Drucksteigerung nicht möglich ist. Bevor der Grenzdruck erreicht ist, ist der zweite Ventilanschluß gegenüber dem ersten Ventilanschluß gesperrt.

Zur Verringerung des erforderten Bauraumes und zur vereinfachten Montage kann erfindungsgemäß eine Kombination der beiden Ventilfunktionen, maximale Druckbegrenzung und Absperren der Fluidverbindung, in einer einzigen Ventilanordnung vorgesehen sein.

Vorteilhafte Ausgestaltungen der Ventilanordnung sind Gegenstand weiterer Ansprüche.

Ein bevorzugtes Ausführungsbeispiel einer erfindungsgemäßen Ventilanordnung sind in der nachstehenden Beschreibung unter Bezugnahme auf die Zeichnungen näher erläutert. Es zeigen:
- Fig. 1: eine Ventilanordnung gemäß der Erfindung in einer schematischen Querschnittsdarstellung;
- Fig. 2: ein Diagramm, in dem die Magnetkraft einer Elektromagnetanordnung gegenüber der Breite des Luftspaltes aufgetragen ist;
- Fig. 3: ein Diagramm, in dem die Flußdichte in einer Elektromagnetanordnung gegenüber der Feldstärke aufgetragen ist.

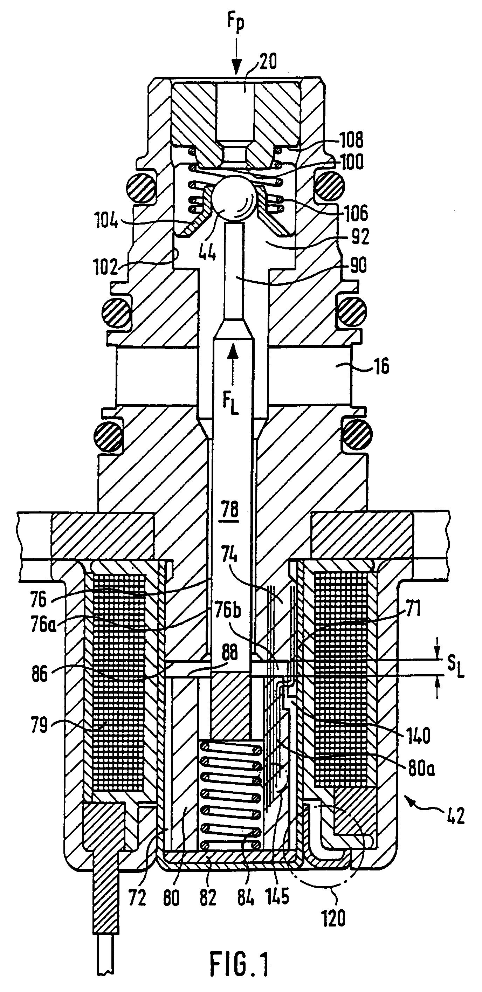

Fig. 1 zeigt eine Ventilanordnung 18, die als 2/2-Wegeventil mit elektromagnetischer Betätigung ausgestaltet ist. Von dem ersten Fluidanschluß 16 führt im unbetätigten Zustand der Ventilanordnung 18 eine Strömungsverbindung zu einem zweiten Fluidanschluß 20.

Wenn die Ventilanordnung 18 betätigt wird, schaltet ein Steuersignal die Ventilanordnung 18 ein, d.h. deren Elektromagnetanordnung 42 wird angesteuert und ein Ventilglied 44 wird verschoben, so daß der erste und der zweite Fluidanschluß 16, 20 nicht mehr in Strömungsverbindung stehen (siehe Fig. 1).

Je nach Anwendungsfall der Ventilanordnung 18 kann in deren gesperrtem Zustand der Fluiddruck sowohl an dem ersten Fluidanschluß als auch an dem zweiten Fluidanschluß der Ventilanordnung 18 ansteigen. Der durch den Druckanstieg hervorgerufenen Kraft Fₚ am zweiten Fluidanschluß 20 der Ventilanordnung 18 steht als Schließkraft die Axialkomponente der durch die Elektromagnetanordnung 42 erzeugten Magnetkraft F_{L} entgegen. Aufgrund der vorbestimmten Druck- und Flächenverhältnisse in der Ventilanordnung 18 ergibt sich ein bestimmter maximal möglicher Druck an dem zweiten Fluidanschluß 20, der z.B. etwa 60 bar betragen kann. Wird dieser maximal mögliche Druck überschritten, gibt das Ventilglied 44 den zweiten Fluidanschluß 20 frei, so daß das Überdruck-Fluid über den ersten Fluidanschluß 16 entweichen kann. Die Bemessung der einzelnen Komponenten wird weiter unten erläutert.

Auf diese Weise wird der maximal mögliche Druck am zweiten Fluidanschluß 20 wirksam begrenzt.

Die Ventilanordnung 18 weist eine im wesentlichen zylindrische Gestalt auf, wobei an einer Stirnfläche (in Fig. 1 oben) der zweite Fluidanschluß 20 mündet, während der erste Fluidanschluß 16 radial an der Außenwand der Ventilanordnung 18 mündet.

Die Elektromagnetanordnung 42 ist dem zweiten Fluidanschluß 20 gegenüberliegend (am unteren Ende der Ventilanordnung 18 in Fig. 1) angeordnet.

Die Elektromagnetanordnung 42 weist eine Erregerspule 79 auf, die in einem Dorn 72 zentriert aufgenommen ist. Die Erregerwicklung ist dabei als Topfspule 79 ausgestaltet, in deren zylindrischer Ausnehmung 72 etwa bis zur Hälfte ein Eisenkern 74 mit einer koaxialen Durchgangsbohrung 76 ragt. In der Durchgangsbohrung 76 ist ein koaxial verschieblicher Tauchanker 78 aufgenommen, der sich an seinem in das Innere der Topfspule 79 reichenden Ende auf den Innendurchmesser der Topfspule 79 durch einen im wesentlichen hohlzylindrischen Eisenkörper 80 verbreitert.

Gegen einen Anschlag 82 der Ventilanordnung 18 kann der Tauchanker 78 durch eine im Inneren des hohlzylindrischen Körpers 80 angeordnete Schraubenfeder 84 abgestützt sein.

Zwischen der Stirnfläche 86 des in das Innere der Topfspule 79 ragenden Eisenkerns 74 und der ihr gegenüberliegenden Stirnfläche 88 des hohlzylindrischen Körpers 80 ist ein in seiner Höhe veränderbarer Luftspalt s_{L} ausgebildet.

Der die Durchgangsbohrung 76 durchragende Tauchanker 78 ragt an seinem von der Elektromagnetanordnung 42 abliegenden Ende 90 in einen Ventilraum 92. Das Ende des Tauchankers 78 ist als Ventilglied 44 ausgebildet oder steht mit dem Ventilglied 44 in Berührung, das beispielsweise aus einer Kugel 44 gebildet ist.

In der Ruhestellung der Ventilanordnung 18 kann Fluid zwischen der Oberfläche des Ventilgliedes 44 und der Wandung 102 des Ventilraumes strömen, so daß eine Verbindung von dem ersten Fluidanschluß 16 zu dem zweiten Fluidanschluß 20 besteht.

Das Ventilglied 44 ist durch eine Schraubenfeder 106 gegen die obere innere Stirnwand 108 der Ventilanordnung 18 abgestützt, so daß eine definierte Ventilöffnung im Bereich des zweiten Fluidanschlusses gegeben ist.

In der Betätigungsstellung der Ventilanordnung 18 liegt das Ventilglied 44 auf einem Ventilsitz 100 an, so daß der erste Fluidanschluß 16 von dem zweiten Fluidanschluß 20 strömungsmäßig getrennt ist.

Zur definierten Einstellung der Schließ- bzw. Haltekräfte bei erregter Elektromagnetanordnung 42, wobei Einflüsse durch Temperatur- und Spannungsschwankungen nach Möglichkeit eliminiert sein sollen, dienen nachfolgende Bemessungsregeln.

Da üblicherweise eine Stromregelung des Betätigungssignals der Elektromagnetanordnung 42 nicht vorgesehen ist, kann ein Proportionalmagnet nicht verwendet werden. Die Einstellung der Magnetkräfte kann damit nur über den Luftspalt s_{L}, und/oder eine definierte Materialauswahl bzw. geometrische Auslegung erreicht werden.

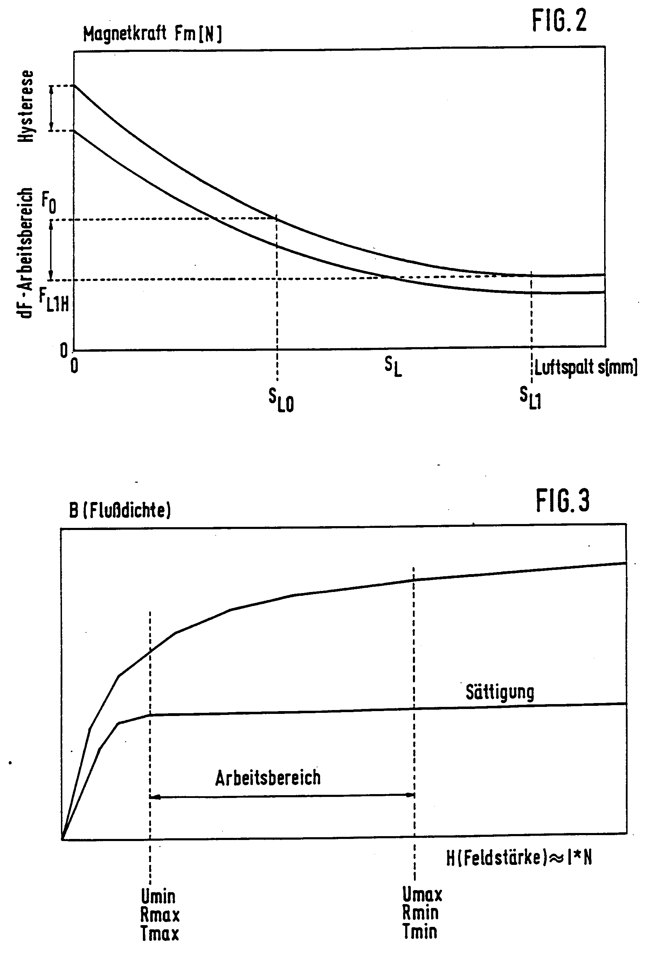

In den Fig. 2 und 3 ist die Abhängigkeit der Magnetkraft Fm über der Höhe des Luftspalts s_{L} bzw. die Flußdichte B über der Feldstärke H aufgetragen.

Wie in Fig. 2 gezeigt, steigt ab einem Grenzluftspalt s_{L0} < s_{L} die Magnetkraft überproportional an. Dies bedeutet, daß in dem Bereich 0...s_{L0} schon sehr kleine Spaltänderungen zu einem überproportionalen Anstieg der Magnetkräfte führen und somit die Spalttoleranzen zur Einstellung entsprechend eng sein müssen.

Um die Einstelltoleranzen zu vergrößern, wird nun vorgeschlagen, den Bereich des Luftspaltes s_{L} zu verwenden, in dem eine konstante oder zumindest nur geringfügig anwachsende Änderung der Magnetkraft (s_{L0} < s_{L} < s_{L1}) als Spaltenmaß verwendet wird. In diesem Abschnitt der Kurve haben Schwankungen des Luftspaltes (Toleranz) einen geringen Einfluß auf die ausgeübten Magnetkräfte.

Um die Temperatur- und Spannungsempfindlichkeit der Elektromagnetanordnung 22 in der Ventilanordnung zu verringern, wird auf das Diagramm in Fig. 3 Bezug genommen.

Die Temperatur- und Spannungsunempfindlichkeit kann durch eine Sättigung des Magnetkreises erreicht werden, In einem Magnetkreis ist der magnetische Fluß (Produkt aus Feldstärke und Fläche) überall konstant. Daher kann man durch die Einbringung eines Materials, das den magnetischen Fluß leitet, an beliebiger Stelle in dem magnetischen Kreis, z.B. an der mit dem Bezugszeichen 120 bezeichneten Stelle in Fig. 1, den Magnetkreis sättigen.

Ist der Magnetkreis gesättigt, stellt sich ein Funktionsverlauf der magnetischen Induktion B über der magnetischen Erregung H(I) gemäß Fig. 3 ein. Wird die Elektromagnetanordnung 42 in dem im wesentlichen konstanten Bereich in Fig. 3 betrieben, kann der Temperatureinfluß fast vollständig eliminiert werden, da der Magnetkreis hier immer gesättigt ist. Der untere Arbeitsbereich ergibt sich dabei aus der minimalen Spannung (Uₘᵢₙ), dem maximalen Widerstand (Rₘₐₓ) und der maximalen Temperatur (Tₘₐₓ). Der obere Arbeitsbereich ergibt sich entsprechend aus der maximalen Spannung (Uₘₐₓ), dem minimalen Widerstand (Rₘᵢₙ) und der minimalen Temperatur (Tₘᵢₙ).

Mit diesen Angaben kann unter Berücksichtigung der Federkraft der Feder 106 oder der resultierenden Federkraft der Federn 84 und 106 sowie den Abmessungen des Ventilsitzes 100 der Ansprechpunkt der Ventilanordnung 18 festgelegt werden, bei dem die von der Elektromagnetanordnung 42 bewirkte Verschiebung des Ventilgliedes 44 durch einen an dem zweiten Fluidanschluß 20 herrschenden Druck soweit überwunden ist, daß die Kugel 44 von ihrem Ventilsitz 100 weggedrückt wird, so daß die Ventilkammer 92 und damit beide Fluidanschlüsse 16, 20 der Ventilanordnung 18 in Strömungsverbindung stehen.

Wenn die Erregerspule 79 mit Strom beaufschlagt wird, wird über die Elektromagnetanordnung am Anker 78 eine Axialkraft erzeugt. Diese ist in der Lage, das Ventilglied 44 gegen die Kraft der Schraubenfeder 106 zu verschieben, so daß das Ventilglied 44 an seinem Ventilsitz 100 anliegt. Dadurch wird die Verbindung von dem ersten Fluidanschluß 16 zu dem zweiten Fluidanschluß 20 gesperrt.

Aufgrund der Ventilflächendimensionierung, den Federkräften und den Magnetkräften reicht die hydraulische Kraft am Fluidanschluß 20 ab einem bestimmten Maß aus, um das Ventilglied 44 von ihrem Ventilsitz 100 abzuheben. Sobald dies eintritt, strömt solange Fluid zu dem ersten Fluidanschluß 16, bis ein vorhandener Überdruck abgebaut ist. Der Druck am zweiten Fluidanschluß 20 bricht dann sofort zusammen und die Magnetkraft kann den Ventilsitz 100 wieder schließen. Dieser Öffnungs- und Schließvorgang kann sich fortlaufend in einer Art "Shuttle-Bewegung" wiederholen.

Auf diese Weise ist der Druck in dem zweiten Fluidanschluß 20 auf einen voreinstellbaren Wert begrenzbar. Ein weiterer Parameter, um die durch die Elektromagnetanordnung 42 erzeugbaren Kräfte einzustellen, besteht darin, den Effekt der sogenannten Magnetkraftscherung auszunutzen. Dabei werden Magnetkräfte nicht nur in axialer Richtung des Tauchankers 78 wirksam, sondern auch quer dazu. Sobald der Tauchanker 78 in den Scherungsbereich eintaucht, wird die axiale Kraftkomponente um die dann erzeugte Querkraft verringert.

Dazu ist, wie in Fig. 1 veranschaulicht, die Durchgangsbohrung 76 als Stufenbohrung 76a, 76b ausgeführt. In entsprechender Weise ist der an dem Tauchanker 78 angeformte hohlzylindrische Teil an seinem in das Innere der Erregerspule 70 weisenden Seite mit einer Stufe 140 versehen, so daß ein verjüngter Bereich 80a in den Bereich 76b der Stufenbohrung eintauchen kann.

Beim Eintauchen baut sich ein Teil des magnetischen Flusses in Querrichtung auf und leistet keinen Beitrag zur Schließkraft der Ventilanordnung. Das heißt, der Querkraftaufbau verringert die zum Geschlossenhalten des Ventils zur Verfügung stehende Kraft in vorherbestimmbarer Weise. Die mit dem Bezugszeichen 145 versehenen Feldllinien spalten sich so auf, daß der progressiv ansteigende Bereich des Magnetkraftverlaufs wesentlich abgeschwächt werden kann, so daß die Magnetkraftänderungsfunktion über den Luftspalt in einen Bereich relativer Konstanz verlagert wird, der nahezu unabhängig von der Maßtoleranz des Luftspaltes ist.

Darüber hinaus wird durch die gestufte Ausführung des Eisenkerns 74 und des Tauchankers 78 mit seinem zylindrischen Ansatz 80, 80a die Querschnittsfläche des Luftspaltes verringert, wodurch eine Sättigung des Magnetkreises bei niedrigen Strömen möglich wird.

## Patentansprüche

1. Ventilanordnung mit
- einem ersten und einem zweiten Fluidanschluß (16, 20) mit jeweils vorherbestimmten Strömungsquerschnitten,
- wenigstens einem Ventilglied (44), das durch eine erste Federanordnung (106) in ein erste Stellung vorgespannt ist, in der der erste und der zweite Fluidanschluß (16, 20) in Strömungsverbindung stehen und
- einer eine Elektromagnetanordnung (42) aufweisende Ventilbetätigungseinrichtung (42), wobei die Elektromagnetanordnung (42) durch wenigstens eine Erregerwicklung (70) gebildet ist, die mit einem Eisenkern (74) verbunden ist, der über einen veränderlichen Luftspalt (s_{L)} mit einem Ankerelement (78, 80) zusammenwirkt, durch das das Ventilglied (44) bewegbar ist, um dieses in eine zweite Stellung zu bringen, in der der erste und der zweite Fluidanschluß (20) gegeneinander gesperrt sind,
wobei in der zweiten Stellung
die Vorspannung der ersten Federanordnung (106) und
die Strömungsquerschnitte des ersten und zweiten Fluidanschlusses (16, 20)
so bestimmt sind, sowie
die durch die Ventilbetätigungseinrichtung (42) auf das Ventilglied (44) einstellbar ausgeübte elektromagnetische Kraft so bemessen ist, daß
- bei einem vorbestimmten Fluiddruck an dem zweiten Fluidanschluß (20) das Ventilglied (44) den zweiten Fluidanschluß (20) soweit öffnet, daß der erste und der zweite Fluidanschluß (16, 20) in Strömungsverbindung stehen,
**dadurch gekennzeichnet,** daß
der Luftspalt (s_{L)} der Elektromagnetanordnung (42) zumindest abschnittsweise eine stufenförmige Querschnittsgestalt (71) aufweist.

2. Ventilanordnung nach Anspruch 1, dadurch gekennzeichnet, daß bei der Erregung der Elektromagnetanordnung (42) die Veränderung des Luftspaltes (s_{L)} in einem Bereich erfolgt, in dem sich die erzeugte Magnetkraft zumindest annähernd linear ändert.

3. Ventilanordnung nach einem der vorhergehenden Ansprüche, dadurch gekennzeichnet, daß die Elektromagnetanordnung (42) in der magnetischen Sättigung betreibbar ist.

4. Ventilanordnung nach einem der vorhergehenden Ansprüche, dadurch gekennzeichnet, daß die Ventilbetätigungseinrichtung (42) als Topfspule (79) mit Eisenkern (74) und einem Tauchanker (78, 80) ausgebildet ist.

5. Ventilanordnung nach einem der vorhergehenden Ansprüche, dadurch gekennzeichnet, daß die Ventilbetätigungseinrichtung (42) durch eine zweite Federanordnung (84) in Richtung der zweiten Stellung des Ventilgliedes (44) vorgespannt ist, wobei die Federkräfte der beiden Federanordnungen (106, 84) so bemessen sind, daß bei erregter Ventilbetätigungseinrichtung und bei an den ersten und zweiten Fluidanschlüssen (16, 20) anliegenden vorbestimmten Drucken das Ventilglied (44) nicht von seinem Ventilsitz (100) abhebt.

6. Ventilanordnung nach einem der vorhergehenden Ansprüche, dadurch gekennzeichnet, daß das Ventilglied (44) und das Betätigungsglied (90) als separate Bauteile ausgeführt sind.

## Claims

1. A valve arrangement, comprising
- a first and a second fluid connection (16, 20) of respective, predetermined flow cross-sections,
- at least one valve element (44) which is biased by a first spring arrangement (106) in a first position in which the first and second fluid connection (16, 20) are communicating via a flow path, and
- a valve actuating means (42) with an electromagnet arrangement(42), with the electromagnet arrangement (42) being constituted by at least one exciter winding (70) which is connected with an iron core (74) which cooperates with an armature element (78, 80) via a variable air gap (s_{L}) by means of which the valve element (44) can be moved in order to assume a second position in which the first and second fluid connection (20) are closed against each other,
wherein in said second position
the biasing force of the first spring arrangement (106) and the flow cross-sections of the first and second fluid connections (16, 20)
are so determined, as well as
the ajustable electromagnetic force that can be applied by valve actuation means (42) to the valve element (44) is so dimensioned, that
- with a predetermined fluid pressure at the second fluid connection (20) the valve element (44) opens the second fluid connection (20) to such an extent that the first and the second fluid connection (16, 20) communicate via a flow path,
characterized in that
at least a section of the air gap (s_{L}) of the electromagnet arrangement (42) has a stepped cross-sectional shape (71).

2. The valve arrangement according to Claim 1, characterized in that upon the excitation of the electromagnet arrangement (42), the variation of the air gap (s_{L}) occurs in a range in which the generated magnetic force changes at least approximately linearly.

3. The valve arrangement according to one of the previous claims, characterized in that the electromagnet arrangement (42) can be operated in the magnetic saturation.

4. The valve arrangement according to one of the previous claims, characterized in that the valve actuating means (42) is formed as a pot coil (79) with an iron core (74) and a plunger armature (78, 80).

5. The valve arrangement according to one of the previous claims, characterized in that the valve actuating means (42) is biased in the direction of the second position of the valve element (44) by a second spring arrangement (84), with the spring forces of the two spring arrangements (106, 84) being so dimensioned that with the excited valve actuating means and with predetermined pressures being applied to the first and second fluid connection (16, 20) the valve element (44) is not lifted off its valve seat (100).

6. The valve arrangement according to one of the previous claims, characterized in that the valve element (44) and the actuation means (90) are designed as separate components.

## Revendications

1. Système de soupapes comprenant
- un premier et un deuxième raccordements de fluide (16, 20) ayant chacun une section de passage d'écoulement prédéterminées,
- au moins un élément de soupape (44) qui est poussé en permanence par un premier moyen élastique (106) dans une première position dans laquelle le premier et le deuxième raccordements de fluide (16, 20) communiquent et
- un dispositif d'actionnement de soupape (42) présentant un ensemble électromagnétique (42), l'ensemble électromagnétique (42) étant formé par au moins un enroulement d'excitation (70) qui est relié à un noyau de fer (74) qui coopère à travers un entrefer variable (s_{L}) avec un élément d'armature (78, 80) qui peut déplacer l'élément de soupape (44) pour amener celui-ci dans une deuxième position dans laquelle le premier et le deuxième raccordements de fluide (20) sont coupés l'un de l'autre,
dans la deuxième position,
la poussée du premier moyen élastique (106) et
les sections de passage des premier et deuxième raccordements de fluide (16, 20)
étant déterminés de telle façon que et
la force électromagnétique réglable exercée sur l'élément de soupape (44) par le dispositif d'actionnement de soupape (42) ayant une grandeur telle que
- lorsque s'exerce une pression de fluide prédéterminée au deuxième raccordement de fluide (20) l'élément de soupape (44) ouvre le deuxième raccordement de fluide (20) de façon que le premier et le deuxième raccordements de fluide (16, 20) communiquent,
caractérisé en ce que
l'entrefer (s_{L}) de l'ensemble électromagnétique (42) présente en coupe au moins par endroits une configuration étagée (71).

2. Système de soupapes selon la revendication 1, caractérisé en ce que lors de l'excitation de l'ensemble électromagnétique (42) la variation de l'entrefer (s_{L}) a lieu dans une plage dans laquelle la force magnétique engendrée varie au moins approximativement linéairement.

3. Système de soupapes selon l'une quelconque des revendications précédentes, caractérisé en ce que l'ensemble électromagnétique (42) peut fonctionner en saturation magnétique.

4. Système de soupapes selon l'une quelconque des revendications précédentes, caractérisé en ce que le dispositif d'actionnement de soupape (42) est une bobine en forme de pot (79) à noyau en fer (74) et à armature plongeante (78, 80).

5. Système de soupapes selon l'une quelconque des revendications précédentes, caractérisé en ce que le dispositif d'actionnement de soupape (42) est poussé en permanence par une deuxième moyen élastique (84) en direction de la deuxième position de l'élément de soupape (44), les forces élastiques des deux moyens élastiques (106, 84) étant telles que lorsque le dispositif d'actionnement de soupape est excité et lorsque sont appliquées aux premier et au deuxième raccordements de fluide (16, 20) des pressions prédéterminées, l'élément de soupape (44) ne se soulève pas de son siège de soupape (100).

6. Système de soupapes selon l'une quelconque des revendications précédentes, caractérisé en ce que l'élément de soupape (44) et l'élément d'actionnement (90) sont réalisés sous la forme de pièces distinctes.
